# EUROPÄISCHE PATENTSCHRIFT

(11) **EP 0 496 111 B1**
(45) Veröffentlichungstag und Bekanntmachung des Hinweises auf die Patenterteilung: **25.03.1998**
(21) Anmeldenummer: 91122249.5
(22) Anmeldetag: 27.12.1991
(51) Int. Cl.: B32B 5/20

(54) **Schockabsorbierende Propylenpolymer-Verbundformteile**
Shock-absorbing propylene polymer composite moulding articles
Articles composites moulés absorbant les chocs à base de polymères de propylène

(30) Priorität: 23.01.1991 DE 4101806
(43) Veröffentlichungstag der Anmeldung: 29.07.1992
(73) Patentinhaber: BASF Aktiengesellschaft, 67063 Ludwigshafen (DE)
(72) Erfinder: Haardt, Udo, W-6843 Biblis (DE); Seiler, Erhard, Dr., W-6700 Ludwigshafen (DE); Tatzel, Hermann, W-6940 Weinheim (DE); Schwager, Harald, Dr., W-6720 Speyer (DE); Domas, Friedrich, W-6823 Altlussheim (DE)

(56) Entgegenhaltungen:
- EP-A- 0 097 504
- EP-A- 0 231 013
- DE-A- 3 100 682
- GB-A- 2 214 868
- US-A- 3 411 967
- US-A- 3 637 458

## Beschreibung

Die Erfindung betrifft schockabsorbierende Verbundformteile auf Basis von Propylenpolymeren, bestehend aus einem beidseitig mit einem Propylenpolymeren kaschierten Schaumstoff aus Propylenpolymeren unter Verwendung einer Schmelzkleberschicht, die die Deckschichten mit dem Schaumstoff verbindet.

Schaumstoffe aus Propylenpolymeren zeichnen sich bekanntlich durch eine hohe Schockabsorption aus. Dennoch haben daraus hergestellte Formteile wegen ihrer unbefriedigenden Oberfläche noch keine Verwendung als Sichtteile im Außen- und im Innenraum von Kraftfahrzeugen gefunden.

In EP-A 97 504 sind schockabsorbierende Propylenpolymer-Verbundteile beschrieben, die aus einer Schaumstoff-Kernschicht und Deckschichten bestehen. Das Kernmaterial kann mit dem Material der Deckschichten zu einer einteiligen Struktur u.a. mittels Schmelzadhäsion verbunden werden. Dabei wird die Oberfläche der Schaumstoff-Kernschicht durch Erhitzen angeschmolzen, und die Deckschichten werden aufgepreßt. Bei dieser Arbeitsweise besteht die Gefahr, daß die Kernschicht durch das Erhitzen geschädigt wird; und daß durch das Anschmelzen ein Substanzverlust, der bei nicht ebenen Kernschichten erheblich sein kann, entsteht.

Der Erfindung lag die Aufgabe zugrunde, Verbundformteile für den Ausbau von Kraftfahrzeugen zu entwickeln, die im Gegensatz zu den bislang verwendeten Teilen z.B. aus Polyurethanen regenerierbar sind. Sie sollen daher aus gleichartigen, miteinander verträglichen, aufschmelzbaren und somit wiederverwendbaren Kunststoffen bestehen. Sie sollen strapazierbar und gleichzeitig schockabsorbierend sein, gute mechanische Eigenschaften und eine hohe Oberflächengüte aufweisen. Die einzelnen Schichten der Verbundformteile sollen problemlos miteinander verklebbar sein.

Diese Aufgaben werden gelöst durch Verbundformteile auf Basis von Propylenpolymeren, bestehend aus einem Schaumstoffkern, der beidseitig mit völlig oder weitgehend kompakten Polymeren durch eine Schmelzkleberschicht verbunden ist.

Gegenstand der Erfindung sind somit schockabsorbierende Propylenpolymer-Verbundformteile, enthaltend
a. eine Deckschicht der Dicke 0,5 bis 10 mm, enthaltend ein Propylenpolymeres vom Schmelzpunkt 130 bis 165°C,
c. eine Schaumstoffschicht der Dicke 3 bis 200 mm mit einer Dichte von 0,015 bis 0,1 g/cm³ auf Basis eines Propylencopolymeren vom Schmelzpunkt 125 bis 155°C,
e. eine Deckschicht der Dicke 0,5 bis 10 mm, enthaltend ein Propylenpolymeres vom Schmelzpunkt 130 bis 165°C,
wobei die Schaumstoffschicht c mit den beiden Deckschichten a und e jeweils durch Zwischenschichten b bzw. d einer Dicke von 0,05 bis 0,5 mm verbunden ist, welche aus einem Schmelzkleber auf Basis eines Olefincopolymeren bestehen, wobei das Olefincopolymere einen Schmelzpunkt zwischen 90°C und 140°C aufweist, der mindestens 5°C unterhalb des Schmelzpunktes des Propylencopolymeren der Kernschicht liegt.

Gegenstand der Erfindung ist ferner ein Verfahren zur Herstellung derartiger Polypropylen-Verbundformteilen, das dadurch gekennzeichnet ist, daß man in einer nicht gasdicht schließenden Form den Zwischenraum zwischen den den Formwandungen angepaßten Schichten a) und b) einerseits und d) und e) andererseits mit Partikeln aus dem Schaumstoff c) mit einem mittleren Durchmesser von 2 bis 8 mm füllt und durch Einleiten von Dampf oder Heißluft in diesen Zwischenraum die Partikel erhitzt, so daß sie aufschäumen und miteinander verschweißen und daß gleichzeitig die Zwischenschichten b und d schmelzen und mit den Schichten a, c und e verschweißen.

Die Kernschicht c) der neuen Verbundformteile besteht aus einem Schaumstoff auf Basis eines Propylencopolymeren. Diese Schicht weist eine Dicke von 3 bis 200 mm, vorzugsweise 4 bis 100 mm, insbesondere 5 bis 20 mm auf. Die Dichte liegt zwischen 0,015 bis 0,1 g/cm³, vorzugsweise zwischen 0,02 bis 0,08 g/cm³, insbesondere zwischen 0,025 und 0,06 g/cm³. Vorzugsweise werden Copolymere des Propylens mit 1 bis 30, insbesondere 1 bis 6 Gew.-% Äthylen und/oder eines C₄- bis C₆-α-Olefins verwendet. Das Copolymere soll einen Schmelzpunkt zwischen 125 und 155°C, vorzugsweise zwischen 130 und 150°C, insbesondere zwischen 140 und 150°C aufweisen. Als Schmelzpunkt gilt dabei das nach der DSC-Methode bestimmte Maximum beim zweiten Aufschmelzen einer Probe (Kristallitschmelzpunkt). Diese Bestimmungsmethode wird auch für die Festlegung der Schmelzpunkte der übrigen Komponenten der Verbundformteile verwendet.

Der Schaumstoff ist ein sogenannter Partikelschaumstoff, wie er durch Verschweißen von Schaumstoffpartikeln mit einem mittleren Durchmesser von 2 bis 8 mm, vorzugsweise 3 bis 6 mm erhältlich ist. Die Kernschicht verleiht dem Verbundformteil die günstigen schockabsorbierenden Eigenschaften.

Die Deckschichten a) und e) der neuen Verbundformteile bestehen im wesentlichen aus mindestens einem Propylenpolymeren, welches ein Homo- oder Copolymeres sein kann. Die Propylenpolymeren sollen einen Schmelzpunkt zwischen 130 und 165°C, vorzugsweise zwischen 140 und 165, insbesondere zwischen 150 und 165°C aufweisen. Der Schmelzpunkt der Deckschichten soll mindestens 5°C, vorzugsweise mehr als 10°C oberhalb des Schmelzpunkts des Propylencopolymeren der Kernschicht c) liegen. Die Deckschichten besitzen eine Dicke von 0,5 bis 10 mm, vorzugsweise 0,8 bis 5 mm.

Die Deckschichten können eine beliebige Oberflächenstruktur, z.B. Narbung, aufweisen.

Die Deckschichten können neben dem Propylenpolymeren übliche Zusatzstoffe in wirksamen Mengen enthalten, wie Farbstoffe, Pigmente, Füllstoffe, Verstärkungsmittel, Stabilisatoren, Antistatika, Gleitmittel, Weichmacher, elastifizierend wirkende Additive o.ä.

Die obere Deckschicht a) (Sichtschicht) ist vorzugsweise elastifiziert, beispielsweise durch die Verwendung einer Mischung aus einer Propylenpolymer-Hartphase aus hochisotaktischem, teilkristallinem Polypropylen, das bis zu 3 Gew.-% Ethyleneinheiten enthalten kann, und einer Weichphase aus einem Ethylen-Propylen-Kautschuk, der 30 bis 70 Gew.-% Ethylen enthält. Derartige zweiphasige Propylenpolymere, die gegebenenfalls teilweise vernetzt ist, sind bekannte Handelsprodukte und werden nach dem bekannten Verfahren der stufenweisen Propylen- und Ethylen/Propylen-Polymerisation, vorzugsweise durch Gasphasenpolymerisation hergestellt. Das Verhältnis Hartphase:Weichphase kann zwischen 90:10 bis 30:70 variieren.

Die Propylenpolymeren können auch als Elastifizierungsmittel übliche hydrierte oder nichthydrierte Styrol-Dien-Elastomere, Ethylen-Propylen-Dien-Kautschuke (EPDM), dynamisch vulkanisierte Polypropylen-EPDM-Blends und lineare Ethylencopolymere niederer Dichte (LLDPE und VLDPE) enthalten.

Die Deckschicht e) ist in der Regel die tragende Schicht des Verbundformteils. Zweckmäßig sollte diese Schicht daher eine den Gebrauchsanforderungen entsprechende Steifigkeit aufweisen, beispielsweise durch Verwendung von hochisotaktischem Polypropylen. Sofern zur Verbesserung der Kälteschlagzähigkeit dem Polymeren Kautschukanteile, z.B. aus Ethylen-Propylen-Kautschuk, zugemischt werden, sollte dieser Anteil nur ca. 5 bis 30 Gew.-% betragen. Vorzugsweise werden den Polymeren zur Erhöhung der Steifigkeit Füllstoffe, wie Talkum, Kreide, Graphit, Kaolin, Wollastonit und/oder Verstärkungsmittel, wie Kurzglasfasern, zugemischt. Die Schicht kann auch durch Langglasfasern oder Glasfasermatten verstärkt werden. Der Füllstoff bzw. das Verstärkungsmittel wird im allgemeinen in einer Menge von 10 bis 60 Gew.-%, bezogen auf die Schicht, verwendet.

Die Zwischenschichten b) und d) der neuen Verbundformteile dienen der Verbindung der Deckschichten mit dem Schaumstoffkern. Sie weisen eine Dicke zwischen 0,05 bis 0,5 mm, vorzugsweise 0,05 bis 0,2 mm auf. Sie bestehen aus einem als Schmelzkleber wirkenden Olefincopolymeren und Sind vorzugsweise zu mehr als 50 Gew.-% aus Ethylen und/oder Propylen und daneben einem anderen α-Olefin oder Vinylacetat, Vinylpropionat, (Meth)acrylsäure, (Meth)acrylsäureester eines Alkohols mit 1 bis 8 C-Atomen oder anderen polymerisierbaren Monomeren aufgebaut. Besonders geeignet sind Terpolymere aus 85 bis 95 Gew.-% Propylen, 2 bis 10 Gew.-% Ethylen und 2 bis 8 Gew.-% eines C₄-C₆-α-Olefins. Der Schmelzpunkt des Olefincopolymeren soll zwischen 90 und 140°C, vorzugsweise zwischen 100 und 135°C, insbesondere zwischen 110 und 130°C liegen. Der Schmelzpunkt liegt erfindungsgemäß mindestens 5°C, vorzugsweise mindestens 10°C unterhalb des Schmelzpunktes des Propylencopolymeren der Kernschicht c).

Die Herstellung der neuen Verbundformteile erfolgt vorteilhaft dadurch, daß man von Partikeln des Schaumstoffs der unter c) beschriebenen Art mit einem mittleren Durchmesser von 2 bis 8 mm, insbesondere 3 bis 6 mm ausgeht. Der Partikeldurchmesser sollte im allgemeinen nicht größer sein als 50 bis 65 % der gewünschten Schaumstoffkerndicke. Die Partikel werden dann in einer nicht gasdicht schließenden Form in den Zwischenraum zwischen den den Formwandungen angepaßten Schichten a) und b) einerseits und d) und e) andererseits eingefüllt, beispielsweise unter Verwendung von Druckluft. Anschließend leitet man in diesen Zwischenraum, vorzugsweise von der Seite oder gegebenenfalls auch durch entsprechende Perforationen der Deckschichten, Dampf oder Heißluft ein und erhitzt dabei die Partikel derart, daß sie erweichen, aufschäumen und miteinander verschweißen, wobei gleichzeitig auch die Zwischenschichten b) und d) schmelzen und den Schaumstoffkern c) mit den Deckschichten a) und e) verschweißen. Nach dem Abkühlen wird das Formteil entformt.

Vorzugsweise geht man so vor, daß ein vorgefertigter Verbund aus Schicht a) und b) durch Ansaugen mit Vakuum bei 130°C bis 200°C in die Matrize des Formwerkzeugs eingeformt wird. Unmittelbar anschließend wird die Patrize des Formwerkzeugs mit den vorgefertigten, der Formwandung angepaßten Verbund aus der Schicht e) und der aufkaschierten Schicht d) derart mit der Matrize zusammengeführt, daß ein Zwischenraum zwischen den Formhälften verbleibt, der um einige Millimeter größer ist als die gewünschte Schaumstoffschicht. Der Zwischenraum wird anschließend mit den Schaumstoffpartikeln gefüllt und danach mit Dampf oder Heißluft erhitzt und vor oder während des Erhitzens werden die Formhälften auf die endgültigen Maße zusammengepreßt. Die Schaumpartikel werden dabei komprimiert und verschweißen miteinander und mit den Deckschichten zum fertigen Formteil.

Die neuen Verbundformteile können in ihren einzelnen Schichten noch übliche Zusatzstoffe enthalten, wie Farbstoffe, Pigmente, Füllstoffe, Verstärkungsstoffe, Flammschutzmittel, Formtrennmittel, Antistatika, Stabilisatoren und andere Hilfsmittel in wirksamen Mengen.

Die neuen Verbundformteile finden vorzugsweise im Kraftfahrzeugbau Verwendung, z.B. als Türverkleidungen, Armaturenbretter, Konsolen, Sonnenblenden, Stoßfänger, Spoiler und dergleichen.

Aufgrund des weitgehend artgleichen Aufbaus der neuen Verbundformteile ist ein praktisch sortenreines Recycling ohne Zerlegung in die Einzelkomponenten möglich.

### Beispiel 1

### Schichtverbund eines Stoßfängerverbundbauteils

Schicht a)
   Blend aus 55 Gew.-% Polypropylen und 45 Gew.-% Ethylen-Propylen-Kautschuk (Gew.-Verhältnis 1 : 1), hergestellt durch stufenweise Polymerisation von Propylen und eines 1 : 1-Gemisches aus Propylen und Ethylen (Handelsprodukt Novolen® 2900 HX der BASF AG), das anschließend einer Nachbehandlung mit geringen Mengen eines Vernetzungsmittels unterworfen wurde.
   Schmelzpunkt der Hartphase 162°C, MFI (230°C; 2,16 kg) = 1,2 g/10 min;
   Schichtdicke: 1,8 mm.
Schicht b)
   Statistisches Terpolymerisat aus 92 Gw.-% Propylen, 2 Gew.-% Ethylen und 4 Gew.-% Buten-1.
   Schmelzpunkt 132°C, MFI (230°C; 2,16 kg) = 5,5 g/10 min;
   Schichtdicke: 0,2 mm.
Schicht c)
   Schaumstoff aus einem statistischen Ethylen-Propylen-Copolymeren und 2,2 Gew.-% Ethylen der Dichte 0,08 g/cm³.
   Schmelzpunkt 147°C, MFI (230°C; 2,16 kg) = 7,5 g/10 min;
   Schichtdicke: 70 mm.
Schicht d)
   wie Schicht b, jedoch Schichtdicke 0,5 mm
Schicht e)
   Homopolypropylen
   Schmelzpunkt: 163°C, MFI (230°C; 2,16 kg) = 70 g/10 min. verstärkt mit 25 Gew.-% Glasmatten (Glasfasern in Wirrlage) und 25 Gew.-% Glasfasern, in Längsrichtung orientiert.
   Schichtdicke: 8 mm.

Die Schichten a) und b) werden als Verbund durch Coextrusion hergestellt und durch Negativ-Tiefziehtechnik bei 175° der Formwerkzeugmatrize angepaßt. Schicht e) wird durch Preßtechnik aus plattenförmigem Halbzeug hergestellt; dabei wird vor dem Pressen die Schicht d) in das Werkzeug eingelegt und auf diese Weise mit der Schicht e) fest verbunden. Der Verbund aus e) und d) wird mit einem erhitzten Nagelbrett perforiert, um Heißdampf in die Form einströmen lassen zu können.

Die mit den Verbundschichten a/b und d/e beschichtete Form wird geschlossen, wobei der Innenraum eine lichte Weite von 70 mm aufweist. Der Innenraum wird mit Schaumstoffpartikeln der Schüttdichte 0,08 g/cm³, Partikeldurchmesser 6 mm, aus einem unter 1,5 bar Druck stehenden Vorratsbehälter gefüllt. Dann wird 8 sec lang Heißdampf von 3,5 bar in den Forminnenraum eingeleitet und die Form anschließend mit Wasser gekühlt. Nach dem Öffnen der Form wird das Verbundteil mittels Auswerfer entformt.

### Beispiel 2

### Armaturentafel-Verbundbauteil

Schicht a)
   Mischung aus
   50 Gew.-% Novolen® 2900 HX (BASF AG), welches durch Erhitzen unter Zusatz von 0,4 Gew.-% Ucarsil® PC2A und 0,2 Gew.-% Ucarsil® PC1B (Union Carbide Corp.) teilvernetzt worden ist. MFI (230°C, 2,16 kg) = 1,2 g/10 min.
   20 Gew.-% VLDPE Norsoflex® FW 1900 (Fa. Enichem)
   10 Gew.-% statistisches Terpolymerisat aus 92 Gew.-% Propylen, 2 Gew.-% Ethylen und 4 Gew.-% Buten-1
   10 Gew.-% hydrierter Styrol-Butadienkautschuk Kiaton® G1650 (Fa. Shell)
   10 Gew.-% Talkum
   Schmelzpunkt der Hartphase 162°C
   Schichtdicke 1,1 mm
Schicht b)
   wie in Beispiel 1, Schichtdicke 0,15 mm.
Schicht c)
   Schaumstoff aus einem statistischen Ethylen-Propylen-Copolymeren mit 2,2 Gew.-% Ethylen, Dichte 0,045 g/cm³
   Schmelzpunkt 147°C
   Schichtdicke variierend zwischen 4 und 20 mm.
Schicht d)
   wie Schicht b).
Schicht e)
   Homopolypropylen MFI (230°C; 2,16 kg) = 2,5 g/10 min.
   Schmelzpunkt 163°C, Schichtdicke 4 mm
   gefüllt mit 40 Gew.-% Talkum.

Auf die durch Kalandrieren hergestellte Schicht a) wird durch Heißkaschieren die Schicht b) aufgebracht. Der Verbund wird durch Vakuumtiefziehen an die Formwandung angepaßt.

Ein Schichtverbund aus d) und e) wird durch Spritzgußtechnik hergestellt, wobei die Schicht d) in die Matrize des Spritzgußwerkzeugs eingelegt und angesaugt wird; anschließend wird die Schmelze für die Schicht e) eingespritzt.

Die mit den Verbundschichten a/b und d/e beschickte Form wird soweit geschlossen, daß der Innenraum eine um 2 mm größere lichte Weite aufweist als die gewünschte Schaumstoffschicht. Der Innenraum wird nun mit Schaumstoffpartikeln der Schüttdichte 0,040 g/cm³, Partikeldurchmesser 3 mm, aus einem under 1,5 bar Druck stehenden Druckbehälter gefüllt, die Form wird geschlossen und 6 sec Dampf von 3,5 bar in den Innenraum eingeleitet. Nach dem Kühlen der Form mit Wasser wird geöffnet und das Formteil entnommen.

### Beispiel 3

Es wurde wie in Beispiel 2 gearbeitet, jedoch als Schicht e) eine mittels Preßtechnik hergestellte Schicht aus Homopolypropylen MFI (230°C, 2,16 kg) = 10 g/min, mit 30 Gew.-% Wirrglasfasermatte verstärkt, verwendet.

## Patentansprüche

1. Schockabsorbierende Propylenpolymer-Verbundformteile, enthaltend
a. eine Deckschicht der Dicke 0,5 bis 10 mm, enthaltend ein Propylenpolymeres vom Schmelzpunkt 130 bis 165°C,
c. eine Schaumstoffschicht der Dicke 3 bis 200 mm mit einer Dichte von 0,015 bis 0,1 g/cm³ auf Basis eines Propylencopolymeren vom Schmelzpunkt 125 bis 155°C,
e. eine Deckschicht der Dicke 0,5 bis 10 mm, enthaltend ein Propylenpolymeres vom Schmelzpunkt 130 bis 165°C,
dadurch gekennzeichnet, daß die Schaumstoffschicht c mit den beiden Deckschichten a und e jeweils durch Zwischenschichten b bzw. d einer Dicke von 0,05 bis 0,5 mm verbunden ist, welche aus einem Schmeltkleber auf Basis eines Olefincopolymeren bestehen, wobei das Olefincopolymere einen Schmelzpunkt zwischen 90°C und 140°C aufweist, der mindestens 5°C unterhalb des Schmelzpunktes des Propylencopolymeren der Kernschicht liegt.

2. Verfahren zur Herstellung von Polypropylen-Verbundformteilen gemäß Anspruch 1, dadurch gekennzeichnet, daß man in einer nicht gasdicht schließenden Form den Zwischenraum zwischen den den Formwandungen angepaßten Schichten a) und b) einerseits und d) und e) andererseits mit Partikeln aus dem Schaumstoff c) mit einem mittleren Durchmesser von 2 bis 8 mm füllt und durch Einleiten von Dampf oder Heißluft in diesen Zwischenraum die Partikel erhitzt, so daß sie aufschäumen und miteinander verschweißen und daß gleichzeitig die Zwischenschichten b und d schmelzen und mit den Schichten a, c und e verschweißen.

## Claims

1. A shock-absorbing propylene polymer composite molding containing
a. an outer layer with a thickness of from 0.5 to 10 mm which contains a propylene polymer having a melting point of from 130 to 165°C,
c. a foam layer with a thickness of from 3 to 200 mm and a density of from 0.015 to 0.1 g/cm³ based on a propylene copolymer having a melting point of from 125 to 155°C,
e. an outer layer with a thickness of from 0.5 to 10 mm which contains a propylene polymer having a melting point of from 130 to 165°C,
wherein the foam layer c is connected to each of the two outer layers a and e by intermediate layers b and d which have a thickness of from 0.05 to 0.5 mm and comprise a hot-melt adhesive based on an olefin copolymer, the olefin copolymer having a melting point of from 90°C to 140°C which is at least 5°C below the melting point of the propylene copolymer of the core layer.

2. A process for the production of a polypropylene composite molding as claimed in claim 1, which comprises, in a mold which does not close in a gas-tight manner, filling the space between layers a) and b) on the one hand and d) and e) on the other hand, which are matched to the shape of the mold walls, with particles of the foam c) having a mean diameter of from 2 to 8 mm, and heating the particles in this space by introducing steam or hot air in such a manner that they expand and weld to one another and at the same time the intermediate layers b and d melt and weld to layers a, c and e.

## Revendications

1. Eléments moulés composites absorbant les chocs à base d'un polymère de propylène, contenant
a. une couche extérieure ayant une épaisseur de 0,5 à 10 mm, contenant un polymère de propylène d'un point de fusion de 130 à 165°C,
c. une couche de mousse ayant une épaisseur de 3 à 200 mm, possédant une masse volumique de 0,015 à 0,1 g/cm³, à base d'un copolymère de propylène d'un point de fusion de 125 à 155°C,
e. une couche extérieure ayant une épaisseur de 0,5 à 10 mm, contenant un polymère de propylène d'un point de fusion de 130 à 165°C,
caractérisés en ce que la couche de mousse c est reliée aux deux couches extérieures a et e, respectivement, par des couches intermédiaires b, respectivement d possédant une épaisseur de 0,05 à 0,5 mm, qui sont constituées par un adhésif fusible à base d'un copolymère d'oléfine, le copolymère d'oléfine présentant un point de fusion entre 90°C et 140°C, qui est inférieur d'au moins 5°C au point de fusion du copolymère de propylène de la couche centrale.

2. Procédé pour la préparation d'éléments moulés composites à base de polypropylène selon la revendication 1, caractérisé en ce qu'on remplit, dans un moule dont la fermeture n'est pas étanche aux gaz, l'espace intermédiaire ménagé entre les couches a) et b) d'une part, et d) et e) d'autre part, dont la configuration épouse celle des parois du moule, avec des particules constituées de la mousse c) possédant un diamètre moyen de 2 à 8 mm, et on chauffe les particules par introduction de vapeur ou d'air chaud dans cet espace intermédiaire de telle sorte qu'elles se transforment en mousse et qu'elles se soudent l'une à l'autre et de telle sorte que, simultanément, les couches intermédiaires b et d sont portées à fusion et se soudent aux couches a, c et e.
